# FASCICULE DE BREVET EUROPEEN

(11) **EP 3 914 818 B1**
(45) Date de publication et mention de la délivrance du brevet: **08.05.2024**
(21) Numéro de dépôt: 20700388.0
(22) Date de dépôt: 13.01.2020
(51) Int. Cl.: F02B 31/04, F02F 1/42, F02B 23/10, F02B 31/00

(54) **CONDUIT D'ADMISSION DE GAZ GÉNÉRANT UN MOUVEMENT AÉRODYNAMIQUE DU GAZ AU SEIN D'UN CYCLINDRE**
GASEINLASSKANAL ZUR ERZEUGUNG EINER AERODYNAMISCHEN GASBEWEGUNG IN EINEM ZYLINDER
GAS INLET DUCT GENERATING AN AERODYNAMIC MOVEMENT OF GAS WITHIN A CYLINDER

(30) Priorité: 21.01.2019 FR 1900507
(43) Date de publication de la demande: 01.12.2021
(73) Titulaire: IFP Energies nouvelles, 92852 Rueil-Malmaison (FR)
(72) Inventeur: GAUTROT, Xavier, 92852 RUEIL-MALMAISON CEDEX (FR); RITTER, Martin, 92852 RUEIL-MALMAISON CEDEX (FR); LECHARD, Christophe, 92852 RUEIL-MALMAISON CEDEX (FR); CHARMASSON, Sébastien, 92852 RUEIL-MALMAISON CEDEX (FR); TROST, Julien, 92852 RUEIL-MALMAISON CEDEX (FR)
(74) Mandataire: IFP Energies nouvelles
(86) Numéro de dépôt international: PCT/EP2020/050715
(87) Numéro de publication internationale: WO 2020/151985

(56) Documents cités:
- EP-A1- 0 790 398
- EP-A1- 2 787 208
- DE-C1- 10 128 500
- FR-A1- 2 902 464
- FR-A1- 2 923 268
- FR-A3- 2 780 093
- JP-A- 2005 105 946

## Description

### Domaine technique

La présente invention concerne le domaine des conduits d'admission de gaz pour un moteur à combustion interne. La présente invention concerne en particulier les conduits d'admission de gaz permettant de générer un mouvement aérodynamique de gaz dans le cylindre du moteur.

Ce type de moteur comprend généralement au moins un cylindre, un piston coulissant dans ce cylindre en un mouvement rectiligne alternatif, des moyens d'admission d'un comburant, des moyens d'échappement de gaz brûlés, une chambre de combustion, et des moyens d'injection pour injecter un combustible.

Comme cela est généralement admis, lors de la conception d'un moteur, les contraintes de performances et d'émissions de polluants sont de plus en plus fortes et il convient donc de trouver de nouvelles solutions pour augmenter le rendement final du moteur.

L'augmentation du rendement de combustion est donc un point clé pour limiter les émissions polluantes à performances égales ou supérieures. Pour cela, l'utilisation de la totalité du carburant présent dans la chambre de combustion, par un comburant comprenant par exemple de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

De plus, afin d'assurer un bon rendement ainsi qu'une bonne vitesse de combustion il est souhaitable d'avoir un haut niveau de turbulence, et plus spécifiquement un haut niveau d'énergie cinétique turbulente, à l'instant de l'allumage du mélange carburé et au cours de la combustion qui suit.

Ce niveau de turbulence élevé peut être atteint grâce à l'emploi d'une aérodynamique d'admission particulière, le « tumble » (mouvement rotatif des gaz dans le cylindre selon un axe longitudinal moteur) ou le « swumble ». Ce dernier type d'aérodynamique se caractérise par le fait que le mouvement macroscopique du mélange carburé est un composé de « swirl » (mouvement rotatif des gaz dans le cylindre autour d'un axe du cylindre) et de tumble (mouvement rotatif des gaz dans le cylindre selon un axe longitudinal moteur, généralement perpendiculaire à l'axe du cylindre).

Le swirl, qui est un mouvement macroscopique de rotation du mélange carburé autour d'un axe colinéaire à l'axe du cylindre, se caractérise par une bonne conservation au cours du processus d'admission et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé.

Le tumble est lui aussi un mouvement macroscopique de rotation du mélange carburé mais autour d'un axe globalement perpendiculaire à l'axe du cylindre. Il a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion appropriée. Par ailleurs, ce mouvement est assez sensible à la géométrie de la chambre de combustion ainsi qu'à la loi de levée, aussi bien en termes d'étalement que de hauteur de levée maximale.

L'utilisation du swumble permet de bénéficier des avantages des deux structures aérodynamiques détaillées ci-dessus, et donc de bénéficier d'une excellente homogénéisation et d'une meilleure vitesse de combustion grâce à un niveau de turbulence plus élevée lors de la phase de compression, que ce qu'on observe avec les meilleurs moteurs à allumage commandé actuels.

### Technique antérieure

Différentes solutions techniques ont été développées pour réaliser ces écoulements turbulents dans le cylindre.

Une première solution est décrite notamment dans le brevet US6606975. Cette solution consiste à piloter un volet placé dans la conduite d'admission pour générer des turbulences. Ce brevet fait apparaître en outre la notion de swumble à faible charge. Une telle solution est complexe et pénalisante pour le remplissage du cylindre.

Une deuxième solution est décrite dans la brevet US5056486.Cette solution propose une définition de conduits d'admission asymétriques permettant de générer une aérodynamique complexe. Toutefois, cette solution nécessite un déphasage des ouvertures des soupapes d'admission, ce qui est pénalisant à forte charge.

Une troisième solution est décrite notamment dans les demandes de brevet DE10128500 et EP1783341. Cette solution permet de générer une aérodynamique complexe à l'aide d'appendices passifs ou actifs dans le conduit d'admission. Dans les deux cas, ces appendices limitent le remplissage du cylindre en gaz. De plus, les appendices actifs nécessitent une commande rendant la solution complexe.

Les documents JP 2005105946, EP 0790398, EP 2787208 décrivent différents conduits d'admission pour moteur à combustion interne avec des géométries spécifiques.

### Résumé de l'invention

Afin de pallier ces inconvénients, la présente invention concerne un conduit d'admission de gaz pour un cylindre d'un moteur thermique. Le conduit comprend des moyens de déviation du gaz pour générer un mouvement aérodynamique du gaz de type tumble au sein du cylindre. Les moyens de déviation comprennent au moins une forme de « tremplin » sur le profil inférieur (intrados) du conduit, et une zone concave sur le profil supérieur (extrados) du conduit. Le but de l'invention est de générer un mouvement aérodynamique du gaz de type tumble au sein du cylindre sans volet placé dans le conduit, sans déphasage des ouvertures des soupapes d'admission, et sans appendices passifs ou actifs dans le conduit d'admission. On appelle « tremplin » un élément apte à favoriser le décollement du flux de gaz du profil inférieur. Cette forme de tremplin et cette zone concave sont dimensionnées pour générer un flux de gaz à forte vitesse, qui permet de générer ensuite une turbulence de type tumble sans défaut. Le conduit selon l'invention permet, de plus, un compromis mouvement aérodynamique du gaz de type tumble et remplissage du cylindre intéressant.

L'invention concerne également un tel conduit d'admission avec des moyens pour générer en outre du swirl (par conséquent du swumble).

L'invention concerne un conduit d'admission de gaz pour un cylindre d'un moteur à combustion interne, ledit conduit d'admission comprend des moyens de déviation dudit gaz pour générer un mouvement aérodynamique dudit gaz au sein dudit cylindre autour d'un axe sensiblement perpendiculaire à l'axe dudit cylindre, lesdits moyens de déviation comprenant une forme de tremplin sur le profil inférieur dudit conduit d'admission, et une forme concave du profil supérieur dudit conduit d'admission, lesdits profils inférieur et supérieur dudit conduit d'admission étant défini en position d'utilisation dudit conduit d'admission. Le rayon de courbure du profil inférieur formant ledit tremplin est inférieur à 40 mm, et en ce que ladite forme concave dudit profil supérieur comprend une zone intermédiaire, dont le rayon de courbure est compris entre 50 et 150 mm et une zone finale dont le rayon de courbure est compris entre 10 et 100 mm, ladite zone finale faisant face à ladite forme de tremplin dudit profil inférieur.

Selon un mode de réalisation, le rayon de courbure dudit profil inférieur formant ledit tremplin est compris entre 20 et 30 mm, de préférence entre 25 et 27 mm.

Conformément à une mise en oeuvre, ledit rayon de courbure de ladite zone intermédiaire est compris entre 100 et 130 mm.

Selon un aspect, ledit rayon de courbure de ladite zone finale est compris entre 60 et 70 mm.

Conformément à un mode de réalisation, ledit profil inférieur comprend une zone initiale de forme concave, dont le rayon de courbure est compris entre 200 et 350 mm, de préférence entre 230 et 300 mm, de manière préférée entre 270 et 280 mm.

Avantageusement, la longueur d'arc de ladite forme de tremplin est compris entre 6 et 9 % de la longueur d'arc de ladite forme concave de ladite zone initiale dudit profil inférieur, de préférence il correspond sensiblement au treizième de la longueur d'arc de ladite forme concave de ladite zone initiale dudit profil inférieur.

Selon une mise en oeuvre, ledit profil supérieur comprend une zone initiale de forme convexe, de préférence le rayon de courbure de ladite zone initiale dudit profil supérieur est supérieur ou égal à 400 mm.

De préférence, la longueur d'arc de ladite zone initiale dudit profil supérieur est sensiblement égale à la somme des longueurs d'arc desdites zones intermédiaire et finale dudit profil supérieur.

De manière avantageuse, le ratio entre la section de passage maximale et la section de passage minimale dudit conduit d'admission est compris entre 1 et 2, et vaut de préférence 1,5.

Selon un aspect, lesdits moyens de déviation dudit gaz comprennent en outre une inclinaison dudit conduit d'admission définie par un angle β de tangente au point d'intersection dudit conduit d'admission avec la sortie dudit conduit d'admission compris entre 0 et 45°, de préférence entre 5 et 45°.

Selon une caractéristique, ledit conduit d'admission comprend des moyens pour générer un mouvement aérodynamique dudit gaz au sein dudit cylindre autour d'un axe parallèle à l'axe dudit cylindre.

L'invention concerne aussi un dispositif d'admission de gaz pour un cylindre d'un moteur à combustion interne, ledit dispositif d'admission de gaz comprenant un conduit d'admission selon l'une des caractéristiques précédentes, au moins une soupape d'admission disposée au sein dudit conduit d'admission, au moins une calibration de ladite soupape d'admission disposée à une extrémité dudit conduit d'admission et dirigée vers la face feu dudit cylindre. Sur ledit profil inférieur dudit conduit d'admission, l'intersection entre ledit conduit d'admission et ladite calibration de ladite soupape d'admission est sur une génératrice formant un angle α compris entre 5 et 45°par rapport à un plan paral lèle à ladite face feu dudit cylindre passant par un point d'intersection entre ledit conduit d'admission et ladite calibration.

Selon un aspect, ledit angle α est compris entre 5 et 20°, de préférence entre 8 et 15°.

De plus, l'invention concerne un moteur à combustion interne comportant au moins un cylindre pourvu au moins d'un conduit d'admission selon l'une des caractéristiques précédentes, d'au moins un conduit d'échappement, et des moyens d'injection de carburant.

En outre, l'invention concerne une utilisation d'un moteur à combustion interne selon l'une des caractéristiques précédentes pour un cycle de Miller ou un cycle d'Atkinson.

### Liste des figures

D'autres caractéristiques et avantages du dispositif selon l'invention, apparaîtront à la lecture de la description ci-après d'exemples non limitatifs de réalisations, en se référant aux figures annexées et décrites ci-après.
[Fig 1]

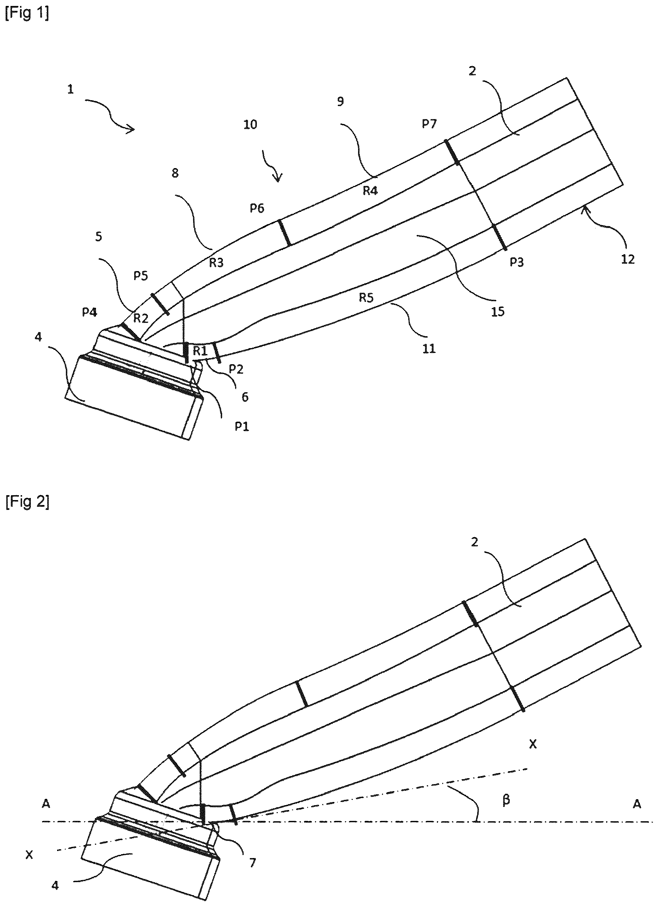

   La figure 1 illustre un conduit d'admission selon un mode de réalisation de l'invention dans son positionnement en mode de fonctionnement.
[Fig 2]
   La figure 2 est une paramétrisation d'un conduit d'admission selon un mode de réalisation de l'invention dans son positionnement en mode de fonctionnement.
[Fig 3]

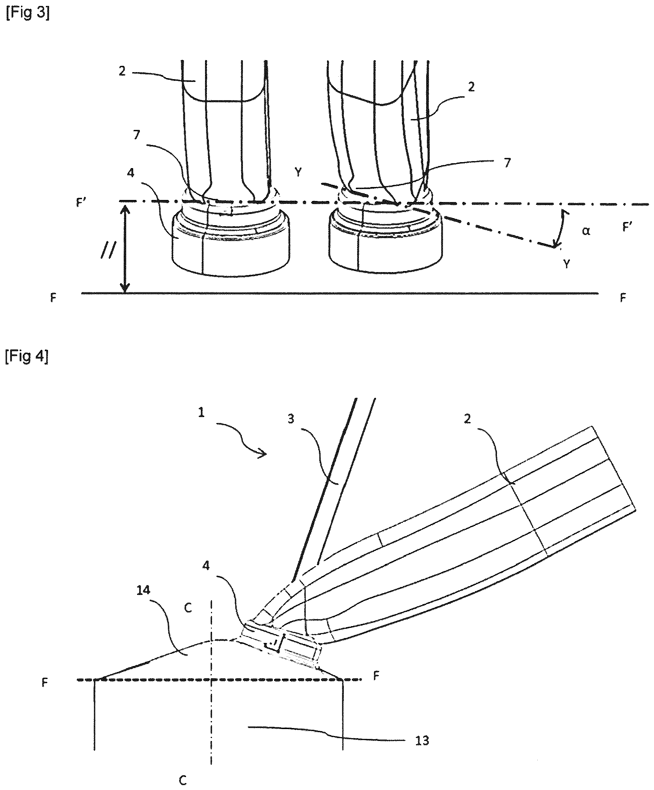

   La figure 3 illustre des vues de l'intrados d'un dispositif d'admission de gaz respectivement selon une première et une deuxième variantes de réalisation de l'invention dans son positionnement en mode de fonctionnement.
[Fig 4]
   La figure 4 illustre un cylindre d'un moteur à combustion interne selon un mode de réalisation de l'invention dans son positionnement en mode de fonctionnement.
[Fig 5]

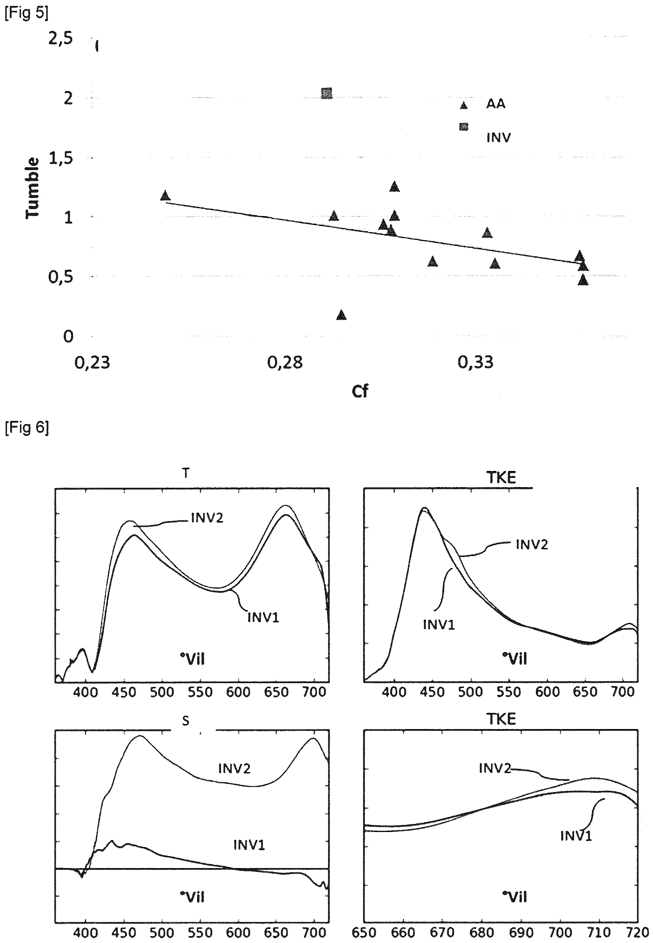

   La figure 5 est un graphique du compromis tumble-perméabilité pour des conduits d'admission selon l'art antérieur et pour le conduit selon l'invention.
[Fig 6]
   La figure 6 illustre des courbes du nombre de tumble, de l'énergie cinétique turbulente (TKE), du nombre de swirl dans le cadre d'une loi standard pour un dispositif d'admission selon une première variante de réalisation de l'invention et pour un dispositif d'admission selon une deuxième variante de réalisation de l'invention.
[Fig 7]

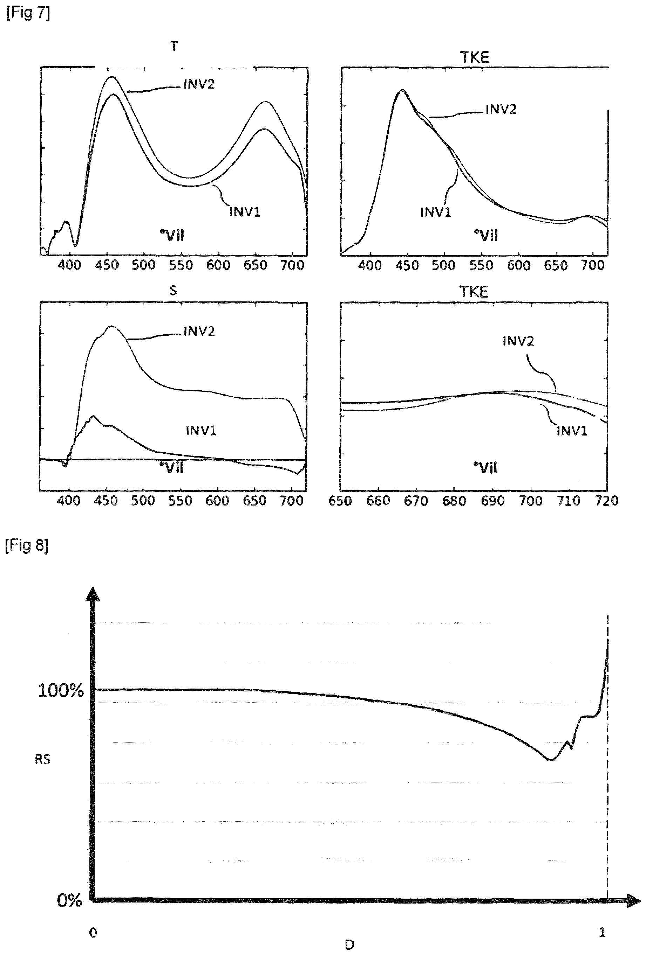

   La figure 7 illustre des courbes du nombre de tumble, de l'énergie cinétique turbulente (TKE), du nombre de swirl dans le cadre d'une loi Miller pour un dispositif d'admission selon une première variante de l'invention et pour un dispositif d'admission selon une deuxième variante de réalisation de l'invention.
[Fig 8]
   La figure 8 est une courbe de l'évolution de la section du conduit d'admission en fonction de la position de la distance du plan de mesure par rapport à l'entrée du conduit d'admission.

### Description des modes de réalisation

La présente invention concerne un conduit d'admission de gaz pour un cylindre d'un moteur à combustion interne. Un tel conduit d'admission comprend une entrée par laquelle le gaz arrive et une sortie par laquelle le gaz sort en direction du cylindre.

Selon l'invention, le conduit d'admission comprend des moyens de déviation du gaz pour générer un mouvement aérodynamique du gaz au sein du cylindre autour d'un axe sensiblement perpendiculaire à l'axe du cylindre. En d'autres termes, le conduit d'admission comprend des moyens pour générer un mouvement aérodynamique du gaz de type tumble dans le cylindre. On rappelle que le tumble a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion appropriée. Par ailleurs, ce mouvement est assez sensible à la géométrie de la chambre de combustion ainsi qu'à la loi de levée, aussi bien en termes d'étalement que hauteur de levée maximale.

Le conduit d'admission comprend un profil inférieur (intrados) et un profil supérieur (extrados) définis dans la position de fonctionnement du conduit d'admissions. Le profil inférieur et le profil supérieur sont relié par deux parois latérales.

Les moyens de déviation du gaz comprennent une forme de « tremplin » de forme concave sur le profil inférieur (intrados) du conduit d'admission et une forme concave du profil supérieur (extrados) du conduit d'admission. La forme de tremplin favorise le décollement du flux de gaz dans le conduit d'admission et le dirige vers la partie supérieure du conduit d'admission et donc vers la partie supérieure du cylindre afin de maximiser le mouvement aérodynamique du gaz de type tumble. La forme concave du profil supérieur permet de donner une forme de convergent au conduit d'admission, ce qui favorise l'augmentation de la vitesse du gaz. De plus, cette association de la forme de tremplin et de la concavité du profil supérieur permet de réaliser un mouvement aérodynamique du gaz de type tumble sans aucun appendice particulier de type masque, volet ou lame.

La forme de tremplin du profil inférieur est réalisée par une courbure du profil inférieur, dont le rayon de courbure est inférieur ou égal à 40 mm. La concavité du profil supérieur est réalisée par deux zones concaves consécutives selon la direction d'écoulement du gaz, appelés respectivement zone intermédiaire et zone finale. La zone finale du profil supérieur fait face, au sein du conduit d'admission, à la forme de tremplin du profil inférieur. Cette zone est dite finale, car elle est positionnée à la sortie du conduit d'admission. Le rayon de courbure de la zone finale est compris entre 10 et 100 mm, et le rayon de courbure de la zone intermédiaire est compris entre 50 et 150 mm.

L'association de la forme de tremplin et de la zone concave, avec des dimensions spécifiques permet de générer un flux de gaz à forte vitesse, qui permet de générer ensuite une turbulence de type tumble sans défaut. Le conduit d'admission selon l'invention permet de plus, un bon compromis tumble et remplissage du cylindre.

De manière avantageuse, le rayon de courbure de la zone finale peut être inférieur au rayon de courbure de la zone intermédiaire, ainsi la vitesse du gaz augmente au sein du conduit d'admission, car la section de passage diminue.

De préférence, pour améliorer l'effet de tremplin sans limiter le remplissage du cylindre, le rayon de la forme de tremplin peut être compris entre 20 et 30 mm, et de manière très préférée il peut être compris entre 25 et 27 mm. En effet, plus le rayon de courbure de la zone de tremplin est petit, plus le conduit d'admission favorise la création du mouvement aérodynamique du gaz de type tumble au détriment du remplissage du cylindre, et au contraire, plus le rayon de courbure de la zone de tremplin est grand, plus le conduit d'admission favorise le remplissage du cylindre, au détriment de la création du mouvement aérodynamique du gaz de type tumble.

De manière avantageuse, le rayon de courbure de la zone intermédiaire du profil supérieur peut être compris entre 100 et 130 mm. Cette gamme permet d'optimiser la génération de l'effet convergent.

Avantageusement, le rayon de courbure de la zone finale du profil supérieur peut être compris entre 60 et 70 mm. Cette gamme permet également d'optimiser la génération de l'effet convergent.

Selon un mode de réalisation de l'invention, le profil inférieur (intrados) du conduit d'admission peut comprendre une zone initiale de forme concave. La zone est dite initiale car elle est à proximité de l'entrée du conduit d'admission. La zone initiale du profil inférieur détermine la forme générale du conduit et influence des paramètres tels que le remplissage et la robustesse du conduit d'admission. La zone initiale est directement suivie par la zone de forme de tremplin.

Pour ce mode de réalisation, le rayon de courbure de la zone initiale du profil inférieur peut être compris entre 200 et 350 mm, de préférence entre 230 et 300 mm, et de manière préférée entre 270 et 280 mm. Ces plages de valeurs permettent d'optimiser le remplissage et la robustesse du conduit d'admission.

De plus, pour ce mode de réalisation, la longueur d'arc de la forme de tremplin peut être compris entre 6 et 9 % de la longueur d'arc de la zone initiale de forme concave du profil inférieur, de préférence la longueur d'arc de la forme de tremplin peut correspondre sensiblement au treizième de la longueur d'arc de la zone initiale de forme concave du profil inférieur. Le ratio entre les longueurs d'arc du profil inférieur est alors idéal en termes de génération de mouvement aérodynamique du gaz de type tumble.

Conformément à une mise en oeuvre de l'invention, le profil supérieur (extrados) du conduit d'admission peut comprendre une zone initiale (dans la direction d'écoulement du gaz dans le conduit d'admission) de forme convexe. La zone est dite initiale car elle à proximité de l'entrée du conduit d'admission. La zone initiale convexe du profil supérieur détermine la section d'entrée du conduit d'admission. De préférence, la zone initiale du profil supérieur est similaire géométriquement à la zone initiale du profil inférieur. La zone initiale est directement suivie par la zone intermédiaire, elle-même directement suivie par la zone finale. Pour cette mise en oeuvre de l'invention, le profil supérieur comporte trois zones ayant des rayons de courbure distincts.

Pour cette mise en oeuvre de l'invention, le rayon de courbure de la zone initiale de la forme convexe du profil supérieur peut être supérieur à 400 mm, de manière à être élevée.

De plus, pour cette mise en oeuvre de l'invention, la longueur d'arc de la zone initiale convexe peut être sensiblement égale à la somme des longueurs d'arc de la zone intermédiaire et de la zone finale du profil supérieur. Le ratio entre les longueurs d'arc du profil supérieur est alors idéal en termes de génération de mouvement aérodynamique du gaz de type tumble.

Selon un aspect de l'invention, le convergent du conduit, c'est-à-dire l'évolution de la section de passage du conduit d'admission peut être choisie de telle sorte que le ratio entre la section de passage maximale du conduit d'admission et la section de passage minimale du conduit d'admission soit comprise entre 1 et 2, et valant de préférence environ 1,5. Ainsi, il est possible de former un tourbillon tumble « propre ».

Selon un aspect de l'invention, la section de passage du conduit d'admission peut avoir une forme sensiblement rectangulaire, avec les coins arrondis. Dans ce cas, l'intersection du conduit d'admission et la calibration de la soupape est formée par quatre arêtes : une du côté de l'intrados, une sur l'extrados, et deux latérales.

Selon une caractéristique de l'invention, la forme de la section du conduit d'admission peut comporter une partie droite horizontale dans sa zone inférieure en position de fonctionnement du conduit d'admission. Cette forme permet de favoriser la génération du mouvement aérodynamique de type swumble.

Selon un exemple de réalisation, les moyens de déviation du gaz peuvent comprendre en outre une inclinaison du conduit d'admission. Cette inclinaison du conduit d'admission peut être définie par un angle β de tangente au point d'intersection du conduit d'admission avec la calibration comprise entre 0 et 45°, de pré férence entre 5 et 45°. Cette inclinaison peut être couplée à la pente de la partie supérieure de la chambre de combustion du cylindre. L'inclinaison du conduit d'admission permet d'incliner le flux de gaz entrant dans le cylindre pour former un mouvement aérodynamique du gaz de type tumble. Par exemple, une optimisation du mouvement aérodynamique de gaz de type tumble peut être atteinte par une tangence entre l'angle β et l'angle de la pente de la partie supérieure de la chambre de combustion.

Selon un mode de réalisation de l'invention, le conduit d'admission peut comprendre en outre des moyens pour générer un mouvement aérodynamique du gaz au sein du cylindre autour d'un axe colinéaire à l'axe du cylindre. En d'autres termes, le conduit d'admission peut comprendre des moyens pour générer un mouvement aérodynamique du gaz de type swirl. Par conséquent, en combinaison avec les moyens pour générer un mouvement aérodynamique du gaz de type tumble. Ce mode de réalisation permet donc de générer un mouvement aérodynamique des gaz de type swumble.

On rappelle que le swirl se caractérise par une bonne conservation du mélange gaz et carburant au cours du processus d'admission et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé.

L'utilisation du swumble permet de bénéficier des avantages des deux structures aérodynamiques de type de tumble et swirl et donc de bénéficier d'une excellente homogénéisation et d'une meilleure vitesse de combustion grâce à un niveau de turbulence plus élevée lors de la phase de compression que ce qu'on observe avec les meilleurs moteurs à allumage commandé actuels.

En outre, l'invention concerne un dispositif d'admission de gaz pour un cylindre d'un moteur à combustion selon les caractéristiques de la revendication 10.

On appelle face feu ou face combustion, le plan inférieur de la culasse (du moteur à combustion interne) orthogonal à l'axe du cylindre. La calibration de la soupape est insérée dans le plan inférieur de la culasse de manière à alimenter le cylindre en gaz.

Selon un mode de réalisation de l'invention, le dispositif d'admission est formé de telle sorte que, à l'intrados (profil inférieur) dudit conduit d'admission, l'intersection entre le conduit d'admission et la calibration de la soupape, est sur une génératrice formant un angle α compris entre 5 et 45°, par rapport à un plan para llèle à la face feu et passant par un point d'intersection entre le conduit d'admission et la calibration de la soupape. On appelle intrados du conduit d'admission, la face inférieure du conduit d'admission. Ainsi, l'intersection de la face inférieure du conduit d'admission avec la calibration de soupape est inclinée par rapport à un plan parallèle à la face feu. Cette inclinaison permet une déviation du gaz à l'entrée de la calibration, et a fortiori à l'entrée du cylindre. Cette déviation de gaz forme un mouvement aérodynamique du gaz dans le cylindre selon une direction parallèle à l'axe du cylindre, en d'autres termes un mouvement aérodynamique du gaz de type swirl. Cette inclinaison peut se traduire par une rotation du conduit d'admission au niveau de son extrémité (l'extrémité du conduit d'admission est alors vrillée), ce qui favorise le mouvement aérodynamique du gaz de type swirl. De plus, cette réalisation permet de réaliser un mouvement aérodynamique du gaz de type swirl sans aucun appendice particulier de type masque, volet ou lame. De plus, l'architecture de ces dispositifs d'admission ne présente aucune contrainte supplémentaire pour une implantation dans une culasse de moteur à combustion interne monocylindre ou multicylindre.

L'inclinaison selon un angle α compris entre 5 et 45° permet la génération d'un mouvement aérodynamique du gaz de type swirl. En dessous de 5°, l'inclinaison est insuffisante pour avoir une influence significative sur le mouvement aérodynamique du gaz dans le cylindre. Au-delà de 45°, la géométrie du conduit d'admission est complexe et difficile à réaliser et l'aérodynamique des gaz se dégrade.

Par combinaison des mouvements aérodynamiques du gaz de type tumble et de type swirl, le dispositif d'admission du gaz selon l'invention permet un mouvement aérodynamique du gaz de type swumble dans le cylindre, ce qui permet de bénéficier d'une excellente homogénéisation et d'une meilleure vitesse de combustion grâce à un niveau de turbulence plus élevé lors de la phase de compression que ce qu'on observe avec les meilleurs moteurs à allumage commandé actuels.

Selon un mode de réalisation de l'invention, l'angle α peut être compris entre 5 et 20°, et de manière préférée entre 8 et 15°. Ces plages angulaires permettent d'optimiser le mouvement aérodynamique du gaz de type swirl, et ainsi d'optimiser les mouvements aérodynamiques du gaz combinées de type swumble.

Conformément à une mise en oeuvre de l'invention, la calibration peut comprendre un masque, qui recouvre partiellement la sortie de la calibration, pour orienter le gaz dans le cylindre et favoriser ainsi le mouvement aérodynamique du gaz.

Le gaz est un comburant ou un mélange carburé (cas de l'injection indirecte), et peut comprendre notamment de l'air à pression ambiante, de l'air suralimenté, un mélange d'air (suralimenté ou non) et de gaz brûlés.

La figure 1 illustre, schématiquement et de manière non limitative, un dispositif d'admission dans son positionnement en mode de fonctionnement selon un mode de réalisation de l'invention. La figure 1 est une vue de côté. Le dispositif d'admission 1 comprend un conduit d'admission 2, une soupape (non représenté), et une calibration 4 de la soupape d'admission.

Le conduit d'admission 2 comprend un profil supérieur 10 (extrados) et un profil inférieur 12 (intrados). Les profils supérieur 10 et inférieur 12 sont reliés par deux parois latérales 15. Les différentes zones des profils supérieur et inférieur sont limitées par des traits gras, positionnant des points P1 à P7.

Le profil inférieur 12 comprend à la sortie du conduit d'admission une zone formant un tremplin 6 de forme concave, délimitée par les points P1 et P2. Cette zone a un rayon de courbure R1 inférieur à 40 mm, valant par exemple 26 mm. Le profil inférieur 12 comprend en outre une zone initiale 11 de forme concave, délimitée par les points P2 et P3. Cette zone a un rayon de courbure R5 compris entre 200 et 350 mm, valant par exemple 275 mm.

Le profil supérieur 10 comprend à la sortie du conduit d'admission une zone finale 5 de forme concave, délimitée par les points P4 et P5. Cette zone initiale 5 a un rayon de courbure R2 compris entre 10 et 100 mm, valant par exemple 65 mm. Le profil supérieur 10 comprend en outre une zone intermédiaire 8 de forme concave, délimitée par les points P5 et P6. Cette zone intermédiaire 8 a un rayon de courbure R3 compris entre 50 et 150 mm, valant par exemple 115 mm. Le profil supérieur 10 comprend en outre une zone initiale 9 de forme convexe, délimitée par les points P6 et P7. Cette zone initiale a un rayon de courbure R4 supérieur à 400 mm, valant par exemple 500 mm.

La figure 2 est une vue similaire à la figure 1 pour un mode de réalisation de l'invention. Pour ce mode de réalisation, les moyens de déviation du gaz pour former un mouvement aérodynamique des gaz de type tumble comprennent en outre l'inclinaison du conduit d'admission 2 selon un angle β, entre une direction XX de tangente au point d'intersection du conduit d'admission 2 avec la calibration 4, et une direction AA horizontale. Cette inclinaison favorise le mouvement aérodynamique du gaz de type tumble.

La figure 3 illustre, schématiquement et de manière non limitative, des vues de l'intrados (face inférieure) du dispositif d'admission de gaz. La figure 3 est dans un plan perpendiculaire à la face feu. La figure de gauche correspond à un dispositif selon une première variante de réalisation de l'invention possédant uniquement des moyens de déviation du gaz pour former un mouvement aérodynamique du gaz de type tumble. La figure de droite correspond à un dispositif selon une deuxième variante de l'invention avec des moyens de déviation du gaz pour former un mouvement aérodynamique du gaz de type tumble et, au niveau de l'intrados, une inclinaison de l'intersection entre le conduit d'admission et la calibration de soupape pour former un mouvement aérodynamique du gaz de type swirl.

Sur ces figures, la droite FF appartient au plan de la face feu (définie par le cylindre non représenté), et la direction F'F' est une droite appartenant à un plan parallèle à la face feu FF passant par un point d'intersection entre le conduit d'admission 2 et la calibration 4 de la soupape d'admission.

Selon la première variante de réalisation illustrée sur la figure de gauche, l'intersection 7 entre le conduit d'admission 2 et la calibration 4 de la soupape d'admission est confondue avec la droite F'F'.

Au contraire, selon la deuxième variante de réalisation illustrée sur la figure de droite, l'intersection 7 entre le conduit d'admission 2 et la calibration 4 de la soupape d'admission est portée par une génératrice d'axe YY inclinée d'un angle α par rapport à la droite F'F'. Cet angle α est compris entre 5 et 45°. On peut observer sur la figure de droite que cette inclinaison entraîne, à proximité du raccord, une légère rotation du conduit d'admission 2, qui a une section de passage sensiblement rectangulaire.

La figure 8 est une courbe représentant le ratio de section RS en fonction de la distance D de la section par rapport à l'entrée du conduit d'admission pour un exemple de réalisation de l'invention. Le ratio de section RS correspond à l'aire de la section considérée par rapport à l'aire de la section du conduit d'admission à l'entrée. La distance a été normalisée : la distance valant 0 correspond à l'entrée du conduit d'admission, et la distance valant 1 correspond à la sortie du conduit d'admission. On observe sur cette courbe une quasi constance initiale, puis une diminution du ratio de section, réalisée notamment par la forme de tremplin et la zone finale du profil supérieur, puis une forte augmentation du ratio de section à la sortie du conduit d'admission. Pour cet exemple, le ratio entre la section maximale et la section minimale du conduit d'admission vaut environ 1,8.

L'invention concerne également un ensemble comprenant un cylindre d'un moteur à combustion interne et dispositif d'admission selon l'une des variantes ou des combinaisons de variantes décrites précédemment.

De plus, la présente invention concerne un ensemble cylindre et disposition d'admission selon l'une des variantes ou combinaison de variantes décrites précédemment pour l'admission d'un gaz dans le cylindre.

En outre, la présente invention concerne un moteur à combustion interne comportant au moins un cylindre, chaque cylindre étant pourvu :
- d'au moins un dispositif d'admission selon l'une des variantes ou combinaison de variantes décrites précédemment, pour l'admission d'un gaz dans le cylindre,
- d'au moins un dispositif d'échappement, pour évacuer les gaz brûlés du cylindre, le dispositif d'échappement étant avantageusement équipé d'une soupape d'échappement,
- d'un piston ayant un mouvement de translation rectiligne alternatif dans le cylindre pour générer une énergie mécanique à partir de la combustion (par rotation d'un vilebrequin),
- de moyens d'injection de carburant, pour générer une combustion.

Selon un mode de réalisation, les moyens d'injection de carburant peuvent être des moyens d'injection directe, c'est-à-dire que les moyens d'injection de carburant sont disposés directement dans le cylindre.

Alternativement, les moyens d'injection de carburant peuvent être des moyens d'injection indirecte, c'est-à-dire que les moyens d'injection de carburant sont disposés dans le dispositif d'admission.

Selon une mise en oeuvre de l'invention, le moteur à combustion interne est un moteur à allumage commandé. Dans ce cas, le moteur comporte en outre au moins une bougie pour générer la combustion du mélange gaz et carburant.

Alternativement, le moteur à combustion interne est un moteur à allumage par compression. Dans ce cas, le moteur ne comporte aucune bougie pour générer la combustion du mélange gaz et carburant.

Selon un aspect de l'invention, lorsque les cylindres comportent deux conduits d'admission, ces deux conduits peuvent être identiques et parallèles par rapport au plan médian de la chambre de combustion.

En variante, les cylindres peuvent être alimentés en gaz par un dispositif d'admission siamois.

Le moteur à combustion interne peut comporter une pluralité de cylindre, notamment 3, 4, 6 ou 6 cylindres.

Les dimensions de l'alésage du cylindre peuvent être quelconques. Toutefois, l'invention est particulièrement adaptée pour un alésage du cylindre d'environ 75 mm.

La figure 4 illustre, schématiquement et de manière non limitative, une vue partielle d'un cylindre d'un moteur à combustion interne dans son positionnement en mode de fonctionnement selon un mode de réalisation de l'invention. Le cylindre 13, dans lequel se déplace un piston (non représenté) comporte une chambre de combustion 14. Un dispositif d'admission 1, en particulier la calibration de la soupape 4, débouche dans la chambre de combustion 14. Un dispositif d'échappement (non représenté) est également disposé dans la chambre de combustion 14.

La direction axiale du cylindre 13 est notée CC. Sur cette figure, est représentée également la face feu FF, qui est perpendiculaire à l'axe CC, la face feu FF correspondant à la partie inférieure de la culasse (non représentée) du moteur à combustion interne.

Le dispositif d'admission 1 peut être identique au dispositif d'admission des figures 1, 2 et 3, et comporte notamment un conduit d'admission 2, une soupape 3, et une calibration de soupape 4.

En outre, la présente invention concerne l'utilisation d'un moteur à combustion interne selon l'une des variantes ou combinaisons de variantes décrites précédemment selon un cycle de Miller ou un cycle d'Atkinson.

Le cycle de Miller est un cycle thermodynamique se caractérisant par une fermeture de la ou des soupapes d'admission avant le point mort bas du piston lors de la phase admission. Cela permet d'avoir un travail récupéré plus important en plus d'un refroidissement de la charge admise. Le dispositif d'admission selon l'invention est particulièrement adapté pour une utilisation en cycle dit Miller sur une plage étendue de fonctionnement grâce à la génération d'un mouvement aérodynamique du gaz de type swumble.

Le cycle d'Atkinson est un cycle thermodynamique utilisé notamment dans les moteurs à combustion variable.

Le moteur à combustion interne selon l'invention peut être utilisé dans le domaine des applications embarquées, tels que les domaines routier, maritime ou aéronautique, ou dans le domaine des installations stationnaires, comme un groupe électrogène.

### Exemples

Les caractéristiques et avantages du conduit d'admission selon l'invention apparaîtront plus clairement à la lecture des exemples d'application ci-après.

Le premier exemple concerne une comparaison du conduit d'admission selon l'invention avec les conduits d'admission du marché.

La figure 5 est un graphique du coefficient de Tumble en fonction d'un coefficient de perméabilité Cf. Le coefficient de tumble est défini comme le ratio de la vitesse angulaire du gaz autour du centre de masse dans la direction x (direction perpendiculaire à l'axe du cylindre) par rapport à la vitesse angulaire du vilebrequin. et le coefficient de perméabilité correspond à la capacité du conduit d'admission à laisser passer un débit d'air par rapport à la section de passage disponible. Le coefficient de perméabilité est donc lié au remplissage du cylindre. Sur la figure, les conduits d'admission du marché AA (selon l'art antérieur) sont représentés par des triangles, et le conduit d'admission selon l'invention INV est représenté par un carré. On remarque que le conduit d'admission selon l'invention INV permet un meilleur compromis ente coefficient de tumble élevé et coefficient de perméabilité que les solutions de l'art antérieur AA. En effet, pour un coefficient de perméabilité Cf identique, le coefficient de Tumble obtenu par le conduit d'admission selon l'invention est doublé par rapport au conduit d'admission selon l'art antérieur.

Pour les deuxièmes exemples, on compare les caractéristiques d'un moteur à combustion interne équipé d'un dispositif d'admission selon une première variante et réalisant uniquement un mouvement aérodynamique du gaz de type tumble (correspondant à la figure 3 de gauche), avec le même moteur à combustion interne équipé d'un dispositif d'admission selon une deuxième variante de l'invention et réalisant un mouvement aérodynamique du gaz de type swumble (correspondant à la figure 3 de droite). Pour cet exemple, l'angle α vaut 15 °.

La figure 6 représente les courbes du nombre de tumble T (en haut à gauche), de l'énergie cinétique turbulente TKE (de l'anglais Turbulent Kinetic Energy) (en haut à droite), du nombre de swirl S (en bas à gauche) en fonction de l'angle vilebrequin °Vil pour une partie du cycle moteur du point mort bas admission (360°) au point mort haut compression (720°). La figure en bas à droite illustre l'énergi e cinétique turbulente TKE pour une zone réduite de plage angulaire de l'angle vilebrequin °Vil à proximité de la combustion qui a lieu après le point mort haut compression (720° de l'ang le vilebrequin). Le nombre de tumble dans une direction x est défini comme le ratio de la vitesse angulaire du gaz autour du centre de masse dans la direction x (direction perpendiculaire à l'axe du cylindre) par rapport à la vitesse angulaire du vilebrequin. Le nombre de swirl est défini comme le ratio de la vitesse angulaire du gaz autour du centre de masse dans la direction de l'axe du cylindre, par rapport à la vitesse angulaire du vilebrequin. Le nombre de tumble et le nombre de swirl sont des nombres sans dimension.

La figure 6 concerne un cycle standard. Sur ces figures, les courbes correspondant au moteur à combustion interne équipé d'un dispositif d'admission selon la première variante sont notées INV1, et les courbes correspondant au moteur à combustion interne équipé d'un dispositif d'admission selon la deuxième variante de l'invention sont notées INV2.

L'énergie cinétique turbulente TKE représente la quantité d'énergie "enfermée" dans la masse d'air.

On remarque sur ces figures, que les deux dispositifs d'admission permettent de générer un mouvement aérodynamique de type tumble (nombre de tumble T élevé). De plus, on remarque que le nombre de swirl S est beaucoup plus élevé pour le dispositif d'admission selon la deuxième variante INV2. Par conséquent, l'inclinaison de l'intersection entre le conduit d'admission et la calibration permet bien de générer un mouvement aérodynamique de type swirl. Le dispositif selon la deuxième variante permet donc bien de générer un mouvement aérodynamique de type swumble (existence de tumble et de swirl). En outre, on remarque que le dispositif d'admission selon la deuxième variante offre un gain sur l'énergie cinétique turbulente TKE par rapport à la première variante, en permettant une augmentation de cette énergie turbulente avant la combustion.

La figure 7 représente les courbes du nombre de tumble T (en haut à gauche), de l'énergie cinétique turbulente TKE (de l'anglais Turbulent Kinetic Energy) (en haut à droite), du nombre de swirl S (en bas à gauche) en fonction de l'angle vilebrequin °Vil pour une partie du cycle moteur du point mort bas admission (360°) au point mort haut compression (720°). La figure en bas à droite illustre l'énergi e cinétique turbulente TKE pour une zone réduite de plage angulaire de l'angle vilebrequin °Vil à proximité de la combustion qui a lieu après le point mort haut compression (720° de l'ang le vilebrequin). La figure 7 concerne un cycle de Miller. Sur ces figures, les courbes correspondant au moteur à combustion interne équipé d'un dispositif d'admission selon la première variante sont notées INV1, et les courbes correspondant au moteur à combustion interne équipé d'un dispositif d'admission selon la deuxième variante sont notées INV2.

On remarque sur ces figures, que les deux dispositifs d'admission permettent de générer un mouvement aérodynamique du gaz de type tumble (nombre de tumble T élevé). De plus, on remarque que le nombre de swirl S est beaucoup plus élevé pour le dispositif d'admission selon la deuxième variante INV2. Par conséquent, l'inclinaison de l'intersection entre le conduit d'admission et la calibration permet bien de générer un mouvement aérodynamique du gaz de type swirl. Le dispositif selon la deuxième variante permet donc bien de générer un mouvement aérodynamique de type swumble (existence de tumble et de swirl). En outre, on remarque que le dispositif d'admission selon la première variante offre un gain sur le l'énergie cinétique turbulente TKE par rapport à la deuxième variante, en permettant une augmentation de cette énergie turbulente avant la combustion.

Ainsi, la génération d'un mouvement aérodynamique du gaz de type swirl permet de mieux conserver l'énergie contenue dans le mouvement aérodynamique lors de l'admission d'un cycle moteur. Ainsi le niveau de turbulence à l'initiation de la combustion est supérieur à celui des conduits purement tumble, surtout pour des lois de levées adaptées au fonctionnement en cycle de Miller.

Des gains en rendement de combustion significatifs sont obtenus avec l'implantation des dispositifs d'admission selon l'invention. De plus, l'architecture de ces dispositifs d'admission ne présente aucune contrainte supplémentaire pour une implantation dans une culasse de moteur monocylindre ou multicylindre, ce qui est un avantage notable en comparaison des solutions existantes pour obtenir du swumble.

## Revendications

1. Conduit d'admission de gaz pour un cylindre d'un moteur à combustion interne, ledit conduit d'admission (2) comprend des moyens de déviation dudit gaz pour générer un mouvement aérodynamique dudit gaz au sein dudit cylindre autour d'un axe sensiblement perpendiculaire à l'axe dudit cylindre, lesdits moyens de déviation comprenant une forme de tremplin sur le profil inférieur (12) dudit conduit d'admission (2), et une forme concave du profil supérieur (11) dudit conduit d'admission (2), lesdits profils inférieur (12) et supérieur (11) dudit conduit d'admission (2) étant défini en position d'utilisation dudit conduit d'admission (2), **caractérisé en ce que** le rayon de courbure R1 du profil inférieur (12) formant ledit tremplin (6) est compris entre 20 et 30 mm, et **en ce que** ladite forme concave dudit profil supérieur comprend une zone intermédiaire (8), dont le rayon de courbure R3 est compris entre 100 et 130 mm et une zone finale (5) dont le rayon de courbure R2 est compris entre 60 et 70 mm, ladite zone finale (5) faisant face à ladite forme de tremplin dudit profil inférieur (12).

2. Conduit d'admission selon la revendication 1, dans lequel le rayon de courbure R1 dudit profil inférieur formant ledit tremplin est compris entre 25 et 27 mm.

3. Conduit d'admission selon l'une des revendications précédentes, dans lequel ledit profil inférieur (12) comprend une zone initiale (11) de forme concave, dont le rayon de courbure R5 est compris entre 200 et 350 mm, de préférence entre 230 et 300 mm, de manière préférée entre 270 et 280 mm.

4. Conduit d'admission selon la revendication 3, dans lequel la longueur d'arc de ladite forme de tremplin (6) est compris entre 6 et 9 % de la longueur d'arc de ladite forme concave de ladite zone initiale (11) dudit profil inférieur (12), de préférence il correspond sensiblement au treizième de la longueur d'arc de ladite forme concave de ladite zone initiale (11) dudit profil inférieur (12).

5. Conduit d'admission selon l'une des revendications précédentes, dans lequel ledit profil supérieur (10) comprend une zone initiale (9) de forme convexe, de préférence le rayon de courbure R4 de ladite zone initiale (9) dudit profil supérieur (10) est supérieur ou égal à 400 mm.

6. Conduit d'admission selon la revendication 5, dans lequel la longueur d'arc de ladite zone initiale (9) dudit profil supérieur (10) est sensiblement égale à la somme des longueurs d'arc desdites zones intermédiaire (8) et finale (5) dudit profil supérieur (10).

7. Conduit d'admission selon l'une des revendications précédentes, dans lequel le ratio entre la section de passage maximale et la section de passage minimale dudit conduit d'admission (2) est compris entre 1 et 2, et vaut de préférence 1,5.

8. Conduit d'admission selon l'une des revendications précédentes, dans lequel lesdits moyens de déviation dudit gaz comprennent en outre une inclinaison dudit conduit d'admission (2) définie par un angle β de tangente au point d'intersection dudit conduit d'admission (2) avec la sortie dudit conduit d'admission (2) compris entre 0 et 45°, de préférence entre 5 et 45° par rapport à une direction (AA) horizontale.

9. Conduit d'admission selon l'une des revendications précédentes, dans lequel ledit conduit d'admission (2) comprend des moyens pour générer un mouvement aérodynamique dudit gaz au sein dudit cylindre autour d'un axe parallèle à l'axe dudit cylindre.

10. Dispositif d'admission de gaz pour un cylindre d'un moteur à combustion interne, ledit dispositif d'admission de gaz (1) comprenant un conduit d'admission (2) selon l'une des revendications précédentes, au moins une soupape d'admission (3) disposée au sein dudit conduit d'admission (2), au moins une calibration (4) de ladite soupape d'admission (2) disposée à une extrémité dudit conduit d'admission (2) et dirigée vers la face feu (FF) dudit cylindre, **caractérisé en ce que**, la section de passage du conduit d'admission (2) a une forme sensiblement rectangulaire, avec les coins arrondis, et sur ledit profil inférieur dudit conduit d'admission (2), l'intersection (7) entre ledit conduit d'admission (2) et ladite calibration (4) de ladite soupape d'admission (3) est sur une génératrice (YY) formant un angle α compris entre 5 et 45° par rapport à un plan (F'F') parallèle à ladite face feu (FF) dudit cylindre passant par un point d'intersection (7) entre ledit conduit d'admission (2) et ladite calibration (4), de telle sorte que l'extrémité du conduit d'admission (2) est vrillée.

11. Dispositif d'admission selon la revendication 10, dans lequel ledit angle α est compris entre 5 et 20°, de préférence entre 8 et 15°.

12. Moteur à combustion interne comportant au moins un cylindre pourvu au moins d'un conduit d'admission (2) selon l'une des revendications 1 à 9, d'au moins un conduit d'échappement, et des moyens d'injection de carburant.

13. Utilisation d'un moteur à combustion interne selon la revendication 12 pour un cycle de Miller ou un cycle d'Atkinson.

## Patentansprüche

1. Gaseinlasskanal für einen Zylinder einer Brennkraftmaschine, wobei der Einlasskanal (2) Mittel zur Ablenkung des Gases umfasst, um eine aerodynamische Bewegung des Gases innerhalb des Zylinders um eine im Wesentlichen zur Achse des Zylinders senkrechte Achse zu erzeugen, wobei die Mittel zur Ablenkung eine Sprungschanzenform am unteren Profil (12) des Einlasskanals (2) und eine konkave Form des oberen Profils (11) des Einlasskanals (2) umfassen, wobei das untere (12) und das obere (11) Profil des Einlasskanals (2) in der Gebrauchsposition des Einlasskanals (2) definiert sind, **dadurch gekennzeichnet, dass** der Krümmungsradius R1 des unteren Profils (12), das die Sprungschanze (6) bildet, zwischen 20 und 30 mm liegt, und dadurch, dass die konkave Form des oberen Profils einen Zwischenbereich (8), dessen Krümmungsradius R3 zwischen 100 und 130 mm liegt, und einen Endbereich (5), dessen Krümmungsradius R2 zwischen 60 und 70 mm liegt, umfasst, wobei der Endbereich (5) der Sprungschanzenform des unteren Profils (12) gegenüberliegt.

2. Einlasskanal nach Anspruch 1, wobei der Krümmungsradius R1 des unteren Profils, das die Sprungschanze bildet, zwischen 25 und 27 mm liegt.

3. Einlasskanal nach einem der vorhergehenden Ansprüche, wobei das untere Profil (12) einen Anfangsbereich (11) von konkaver Form umfasst, dessen Krümmungsradius R5 zwischen 200 und 350 mm liegt, vorzugsweise zwischen 230 und 300 mm, stärker bevorzugt zwischen 270 und 280 mm.

4. Einlasskanal nach Anspruch 3, wobei die Bogenlänge der Sprungschanzenform (6) zwischen 6 und 9 % der Bogenlänge der konkaven Form des Anfangsbereichs (11) des unteren Profils (12) beträgt und vorzugsweise im Wesentlichen einem Dreizehntel der Bogenlänge der konkaven Form des Anfangsbereichs (11) des unteren Profils (12) entspricht.

5. Einlasskanal nach einem der vorhergehenden Ansprüche, wobei das obere Profil (10) einen Anfangsbereich (9) von konvexer Form umfasst und der Krümmungsradius R4 des Anfangsbereichs (9) des oberen Profils (10) vorzugsweise größer oder gleich 400 mm ist.

6. Einlasskanal nach Anspruch 5, wobei die Bogenlänge des Anfangsbereichs (9) des oberen Profils (10) im Wesentlichen gleich der Summe der Bogenlängen des Zwischenbereichs (8) und des Endbereichs (5) des oberen Profils (10) ist.

7. Einlasskanal nach einem der vorhergehenden Ansprüche, wobei das Verhältnis zwischen dem maximalen Durchlassquerschnitt und dem minimalen Durchlassquerschnitt des Einlasskanals (2) zwischen 1 und 2 liegt und vorzugsweise 1,5 beträgt.

8. Einlasskanal nach einem der vorhergehenden Ansprüche, wobei die Mittel zur Ablenkung des Gases außerdem eine Neigung des Einlasskanals (2) umfassen, die durch einen Winkel β der Tangente am Schnittpunkt des Einlasskanals (2) mit dem Ausgang des Einlasskanals (2) definiert ist, der zwischen 0 und 45°, vorzugsweise zwischen 5 und 45° in Bezug auf eine horizontale Richtung (AA) liegt.

9. Einlasskanal nach einem der vorhergehenden Ansprüche, wobei der Einlasskanal (2) Mittel zum Erzeugen einer aerodynamischen Bewegung des Gases innerhalb des Zylinders um eine zur Achse des Zylinders parallele Achse umfasst.

10. Gaseinlassvorrichtung für einen Zylinder einer Brennkraftmaschine, wobei die Gaseinlassvorrichtung (1) einen Einlasskanal (2) nach einem der vorhergehenden Ansprüche, mindestens ein innerhalb des Einlasskanals (2) angeordnetes Einlassventil (3) und mindestens ein Kalibrierelement (4) des Einlassventils (2), das an einem Ende des Einlasskanals (2) angeordnet und zur Brennseite (FF) des Zylinders gerichtet ist, umfasst, **dadurch gekennzeichnet, dass** der Durchlassquerschnitt des Einlasskanals (2) eine im Wesentlichen rechteckige Form mit abgerundeten Ecken aufweist und auf dem unteren Profil des Einlasskanals (2) der Schnitt (7) zwischen dem Einlasskanal (2) und dem Kalibrierelement (4) des Einlassventils (3) auf einer Erzeugenden (YY) liegt, die einen Winkel a zwischen 5 und 45° in Bezug auf eine zur Brennseite (FF) des Zylinders parallele Ebene (F'F') bildet, die durch einen Schnittpunkt (7) zwischen dem Einlasskanal (2) und dem Kalibrierelement (4) verläuft, so dass das Ende des Einlasskanals (2) verdreht ist.

11. Einlassvorrichtung nach Anspruch 10, wobei der Winkel a zwischen 5 und 20°, vorzugsweise zwischen 8 und 15° liegt.

12. Brennkraftmaschine, welche mindestens einen Zylinder aufweist, der mit mindestens einem Einlasskanal (2) nach einem der Ansprüche 1 bis 9, mindestens einem Abgaskanal und Kraftstoffeinspritzmitteln versehen ist.

13. Verwendung einer Brennkraftmaschine nach Anspruch 12 für einen Miller-Zyklus oder einen Atkinson-Zyklus.

## Claims

1. Gas intake duct for a cylinder of an internal-combustion engine, said intake duct (2) comprises means for diverting said gas to generate an aerodynamic motion of said gas inside said cylinder about an axis substantially perpendicular to the axis of said cylinder, said diverting means comprising a ramp shape in the lower profile (12) of said intake duct (2) and a concave shape in the upper profile (11) of said intake duct (2), said lower profile (12) and upper profile (11) of said intake duct (2) being defined in the usage position of said intake duct (2), **characterized in that** the radius of curvature R1 of the lower profile (12) forming said ramp (6) is between 20 mm and 30 mm, and **in that** said concave shape of said upper profile comprises an intermediate zone (8) having a radius of curvature R3 of between 100 mm and 130 mm and an end zone (5) having a radius of curvature R2 of between 60 mm and 70 mm, said end zone (5) facing said ramp shape of said lower profile (12).

2. Intake duct according to Claim 1, in which the radius of curvature R1 of said lower profile forming said ramp is between 25 mm and 27 mm.

3. Intake duct according to one of the preceding claims, in which said lower profile (12) comprises a concave initial zone (11) having a radius of curvature R5 of between 200 mm and 350 mm, preferably between 230 mm and 300 mm, preferably between 270 mm and 280 mm.

4. Intake duct according to Claim 3, in which the arc length of said ramp shape (6) is between 6% and 9% of the arc length of said concave shape of said initial zone (11) of said lower profile (12), and preferably corresponds substantially to one thirteenth of the arc length of said concave shape of said initial zone (11) of said lower profile (12).

5. Intake duct according to one of the preceding claims, in which said upper profile (10) comprises a convex initial zone (9), and the radius of curvature R4 of said initial zone (9) of said upper profile (10) is preferably equal to or greater than 400 mm.

6. Intake duct according to Claim 5, in which the arc length of said initial zone (9) of said upper profile (10) is substantially equal to the sum of the arc lengths of said intermediate zone (8) and said end zone (5) of said upper profile (10).

7. Intake duct according to one of the preceding claims, in which the ratio between the maximum flow area and the minimum flow area of said intake duct (2) is between 1 and 2, and is preferably 1.5.

8. Intake duct according to one of the preceding claims, in which said diverting means for said gas further comprise an incline of said intake duct (2) defined by a tangent angle β at the intersection point of said intake duct (2) with the outlet of said intake duct (2) of between 0° and 45°, preferably between 5° and 45° in relation to a horizontal direction (AA).

9. Intake duct according to one of the preceding claims, in which said intake duct (2) comprises means for generating an aerodynamic motion of said gas inside said cylinder about an axis parallel to the axis of said cylinder.

10. Gas intake device for a cylinder of an internal-combustion engine, said gas intake device (1) comprising an intake duct (2) according to one of the preceding claims, at least one intake valve (3) positioned inside said intake duct (2), at least one calibration part (4) of said intake valve (2) positioned at one end of said intake duct (2) and oriented towards the fire face (FF) of said cylinder, **characterized in that** the flow area of the intake duct (2) is substantially rectangular with rounded corners, and on said lower profile of said intake duct (2), the intersection (7) between said intake duct (2) and said calibration part (4) of said intake valve (3) is on a generatrix (YY) forming an angle α of between 5° and 45° with a plane (F'F') parallel to said fire face (FF) of said cylinder passing through an intersection point (7) between said intake duct (2) and said calibration part (4), such that the end of the intake duct (2) is twisted.

11. Intake device according to Claim 10, in which said angle α is between 5° and 20°, preferably between 8° and 15°.

12. Internal-combustion engine including at least one cylinder provided with at least one intake duct (2) according to one of Claims 1 to 9, at least one exhaust duct, and fuel injection means.

13. Use of an internal-combustion engine according to Claim 12 for a Miller cycle or an Atkinson cycle.
